(19) Europäisches Patentamt
European Patent Office
Office européen des brevets

(11) EP 3 614 480 A1

(12) **EUROPEAN PATENT APPLICATION**
published in accordance with Art. 153(4) EPC

(43) Date of publication:
**26.02.2020 Bulletin 2020/09**

(21) Application number: **17906273.2**

(22) Date of filing: **21.04.2017**

(51) Int Cl.:
***H01M 10/0565*** *(2010.01)* ***H01M 10/0567*** *(2010.01)*

(86) International application number:
**PCT/JP2017/016082**

(87) International publication number:
**WO 2018/193628 (25.10.2018 Gazette 2018/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Hitachi Chemical Company, Ltd.**
**Chiyoda-ku**
**Tokyo 100-6606 (JP)**

(72) Inventors:
- **MIKUNI, Hiroki**
  **Tokyo 100-6606 (JP)**
- **OGAWA, Hideyuki**
  **Tokyo 100-6606 (JP)**
- **SERA, Yusuke**
  **Tokyo 100-6606 (JP)**

(74) Representative: **Hoffmann Eitle**
**Patent- und Rechtsanwälte PartmbB**
**Arabellastraße 30**
**81925 München (DE)**

# (54) POLYMER ELECTROLYTE COMPOSITION, AND POLYMER SECONDARY BATTERY

(57) Disclosed is a polymer electrolyte composition comprising a polymer having a structural unit represented by the following formula (1), at least one electrolyte salt selected from the group consisting of lithium salts, sodium salts, magnesium salts, and calcium salts, and an inorganic oxide including a lithium element, a lanthanum element, and a zirconium element, wherein, when the molar number of the lanthanum element contained in the inorganic oxide is set to M(La) and the molar number of the zirconium element contained in the inorganic oxide is set to M(Zr), M(La) and M(Zr) satisfy the following expression (2):

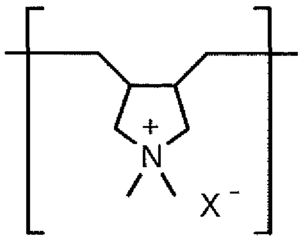

(1)

wherein $X^-$ represents a counter anion; and

$$0.4 \leq M(Zr)/M(La) \leq 0.8 \ (2).$$

EP 3 614 480 A1

## Description

### Technical Field

The present invention relates to polymer electrolyte compositions and polymer secondary batteries.

### Background Art

Lithium secondary batteries are energy devices having a high energy density and are spread as power sources for mobile electronic devices and electric vehicles. For example, in a 18650-type lithium secondary battery, a wound electrode body is accommodated inside a cylindrical battery can. The wound electrode body is configured such that a microporous separator is sandwiched between a positive electrode and a negative electrode and these are wound around in a swirl, and the separator is immersed in a flammable liquid electrolyte. In such a lithium secondary battery, if the temperature of the battery abruptly rises in an emergency, there is a possibility that the liquid electrolyte vaporizes and the inner pressure rises to thereby lead to a burst. If the temperature of the battery abruptly rises, there is also a possibility that the liquid electrolyte fires.

It is important to prevent situations in which a lithium secondary battery ignites or fires in design of lithium secondary batteries. In lithium secondary batteries, it is required that the safety be further improved with the aim of achieving a higher energy density and enlargement.

As a fundamental solution to improve the safety of lithium secondary batteries, development of all-solid-state batteries, in which the liquid electrolyte is replaced with a polymer electrolyte or inorganic solid electrolyte and all the components are of solid, has proceeded. Particularly, polymer electrolytes, which can be easily formed into a sheet by applying a polymer solution, have been intensively investigated.

In order to improve the ionic conductivity, investigations are actively conducted on non-aqueous solvents to be combined with polymer electrolytes. As such non-aqueous solvents, from the viewpoint of ionic conductivity, organic solvents such as dialkyl carbonate are widely used (see, e.g., Patent Literature 1).

### Citation List

### Patent Literature

Patent Literature 1: JP No. 2007-141467

### Summary of Invention

### Technical Problem

However, in a polymer electrolyte in which an organic solvent is employed, the polymer electrolyte and the organic solvent may be separated to cause the organic solvent to ooze out.

The present invention has been made in consideration of the situation described above, and it is a major object to provide a polymer electrolyte composition excellent in the component retention of the composition.

### Solution to Problem

A first aspect of the present invention is a polymer electrolyte composition comprising a polymer having a structural unit represented by the following formula (1), at least one electrolyte salt selected from the group consisting of lithium salts, sodium salts, magnesium salts, and calcium salts, and an inorganic oxide including a lithium element, a lanthanum element, and a zirconium element, wherein, when the molar number of the lanthanum element contained in the inorganic oxide is set to M(La) and the molar number of the zirconium element contained in the inorganic oxide is set to M(Zr), M(La) and M(Zr) satisfy the following expression (2):

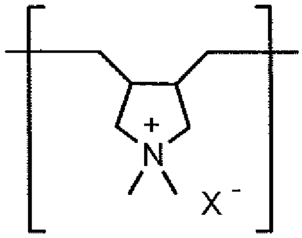

(1)

wherein $X^-$ represents a counter anion; and

$$0.4 \leq M(Zr)/M(La) \leq 0.8 \quad (2).$$

The crystal structure of the inorganic oxide may be a cubic crystal system. Additionally, it is preferred that the inorganic oxide show diffraction peaks at $2\theta = 17\pm2°$, $2\theta = 26\pm2°$, and $2\theta = 31\pm2°$ in X-ray diffraction.

The polymer electrolyte composition may be formed into a sheet form. Sheets formed by employing the polymer electrolyte composition may become sheets that can retain their shape even without a substrate or the like. It should be noted herein that the polymer electrolyte composition formed into a sheet form may be referred to as "a polymer electrolyte sheet". The thickness of the sheet may be 1 to 200 μm.

The present invention may further relate to application of the aforementioned composition as a polymer electrolyte and to application of the aforementioned composition for producing a polymer electrolyte.

A second aspect of the present invention is a polymer secondary battery that comprises a positive electrode, a negative electrode, and an electrolyte layer comprising the aforementioned polymer electrolyte composition placed between the positive electrode and the negative electrode.

**Advantageous Effects of Invention**

According to the present invention, there is provided a polymer electrolyte composition excellent in the component retention of the composition. According to the present invention, there is also provided a polymer secondary battery employing such a polymer electrolyte composition.

**Brief Description of Drawings**

Figure 1 is a perspective view showing a polymer secondary battery according to First Embodiment;
Figure 2 is an exploded perspective view showing one embodiment of an electrode group in the polymer secondary battery shown in Figure 1;
Figure 3 is a schematic cross sectional view showing one embodiment of the electrode group in the polymer secondary battery shown in Figure 1;
Figure 4(a) is a schematic cross sectional view showing a polymer electrolyte sheet according to one embodiment;
Figure 4(b) is a schematic cross sectional view showing a polymer electrolyte sheet according to another embodiment;
Figure 5 is a schematic cross sectional view showing one embodiment of an electrode group in the polymer secondary battery according to Second Embodiment; and
Figure 6 is an X-ray diffraction (XRD) spectrum in the diffraction angle range of 15 to 60° for LLZ used in Example 1.

**Description of Embodiments**

Hereinbelow, embodiments of the present invention will be described with reference to the drawings. However, the present invention is not intended to be limited to the following embodiments. In the following embodiments, their components (including steps) are not essential unless otherwise explicitly stated. Dimensions of the components in each drawing are imaginary, and the relative relationship of the dimension between the components is not limited to those shown in each drawing.

The same shall apply to numerical values and numerical ranges herein, which do not limit the present invention. Each numerical range specified using "to" herein represents a range including the numerical values indicated before and after "to" as the minimum value and the maximum value, respectively. In the numerical ranges described stepwisely

herein, the upper limit or lower limit described in one numerical range may be replaced by the upper limit or lower limit of another numerical range described stepwisely. Also in the numerical ranges described herein, the upper limit or lower limit of the numerical ranges may be replaced by a value shown in Examples.

Herein, as abbreviations, the following may be used.

[EMI]$^+$: 1-ethyl-3-methylimidazolium cation
[DEME]$^+$: N,N-diethyl-N-methyl-N-(2-methoxyethyl)ammonium cation
[Py12]$^+$: N-ethyl-N-methylpyrrolidinium cation
[Py13]$^+$: N-methyl-N-propylpyrrolidinium cation
[PP13]$^+$: N-methyl-N-propylpiperidinium cation
[LiG4]$^+$: tetraethylene glycol dimethyl ether lithium cation
[FSI]$^-$: bis(fluorosulfonyl)imide anion
[TFSI]$^-$: bis(trifluoromethanesulfonyl)imide anion
[f3C]$^-$: tris(fluorosulfonyl)carbanion
[BOB]$^-$: bis oxalate borate anion
[P(DADMA)][Cl]: poly(diallyldimethylammonium)chloride
[P(DADMA)] [TFSI]: poly(diallyldimethylammonium)bis(trifluoromethanesulfonyl)imide
LLZ: lithium lanthanum zirconate

[First Embodiment]

Figure 1 is a perspective view showing a polymer secondary battery according to First Embodiment. As shown in Figure 1, a polymer secondary battery 1 comprises an electrode group 2 composed of a positive electrode, a negative electrode, and an electrolyte layer, and a bag-like battery outer packaging 3 to accommodate the electrode group 2. A positive electrode collector tab 4 on the positive electrode and a negative electrode collector tab 5 on the negative electrode are provided respectively. The positive electrode collector tab 4 and the negative electrode collector tab 5 protrude from the inside of the battery outer packaging 3 to the outside such that the positive electrode and the negative electrode can each electrically connect to the outside of the polymer secondary battery 1.

The battery outer packaging 3 may be formed with a laminate film, for example. The laminate film may be a layered film in which, for example, a resin film such as a polyethylene terephthalate (PET) film, a foil of metal such as aluminum, copper, and stainless steel, and a sealant layer such as polypropylene are layered in this order.

Figure 2 is an exploded perspective view showing one embodiment of the electrode group 2 in the polymer secondary battery 1 shown in Figure 1. Figure 3 is a schematic cross sectional view showing one embodiment of the electrode group 2 in the polymer secondary battery 1 shown in Figure 1. As shown in Figure 2 and Figure 3, an electrode group 2A according to the present embodiment comprises a positive electrode 6, an electrolyte layer 7, and a negative electrode 8 in this order. The positive electrode 6 comprises a positive electrode current collector 9 and a positive electrode mixture layer 10 provided on the positive electrode current collector 9. On the positive electrode current collector 9, the positive electrode collector tab 4 is provided. The negative electrode 8 comprises a negative electrode current collector 11 and a negative electrode mixture layer 12 provided on the negative electrode current collector 11. On the negative electrode current collector 11, the negative electrode collector tab 5 is provided.

The positive electrode current collector 9 may be formed with aluminum, stainless steel, titanium or the like. The positive electrode current collector 9 may be specifically an aluminum perforated foil having pores of which pore diameter is 0.1 to 10 mm, an expanded metal, a foamed metal sheet or the like. The positive electrode current collector 9 may be formed with any material other than those described above as long as the material is not subject to change such as dissolution and oxidation during use of the battery, and additionally, its shape and production method are not limited.

The thickness of the positive electrode current collector 9 may be 1 $\mu$m or more, 5 $\mu$m or more, or 10 $\mu$m or more. The thickness of the positive electrode current collector 9 may be 100 $\mu$m or less, 50 $\mu$m or less, or 20 $\mu$m or less.

The positive electrode mixture layer 10, in one embodiment, comprises a positive electrode active material, a conductive agent, and a binder.

The positive electrode active material may be $LiCoO_2$, $Li_{0.3}MnO_2$, $Li_4Mn_5O_{12}$, $V_2O_5$, $LiMn_2O_4$, $LiNiO_2$, $LiFePO_4$, $LiCo_{1/3}Ni_{1/3}Mn_{1/3}O_2$, $Li_{1.2}(Fe_{0.5}Mn_{0.5})_{0.8}O_2$, $Li_{1.2}(Fe_{0.4}Mn_{0.4}Ti_{0.2})_{0.8}O_2$, $Li_{1+x}(Ni_{0.5}Mn_{0.5})_{1-x}O_2$ (provided that x = 0 to 1), $LiNi_{0.5}Mn_{1.5}O_4$, $Li_2MnO_3$, $Li_{0.76}Mn_{0.5}1Ti_{0.49}O_2$, $LiNi_{0.8}Co_{0.15}Al_{0.05}O_2$, $Fe_2O_3$, $LiCoPO_4$, $LiMnPO_4$, $Li_2MPO_4F$(M = Fe, Mn), $LiMn_{0.875}Fe_{0.125}PO_4$, $Li_2FeSiO_4$, $Li_{2-x}MSi_{1-x}P_xO_4$(M = Fe, Mn) (provided that x = 0 to 1), $LiMBO_3$ (M = Fe, Mn), $FeF_3$, $Li_3FeF_6$, $Li_2TiF_6$, $Li_2FeS_2$, $TiS_2$, $MoS_2$, FeS and the like.

The positive electrode active material may be ungranulated primary particles or granulated secondary particles.

The particle size of the positive electrode active material is adjusted to be equal to or smaller than the thickness of the positive electrode mixture layer 10. In the case where coarse particles having a particle size equal to or larger

than the thickness of positive electrode mixture layer 10 are present in the positive electrode active material, the coarse particles are removed by sieve classification, wind flow classification, or the like in advance to select positive electrode active material having a particle size equal to or smaller than the thickness of the thickness of the positive electrode mixture layer 10.

The average particle size of the positive electrode active material is preferably 1 μm or more, more preferably 3 μm or more, still more preferably 5 μm or more and preferably 30 μm or less, more preferably 25 μm or less, still more preferably 20 μm or less from the viewpoint of suppressing reduction in filling of the positive electrode active material due to decrease in the particle size as well as of enhancing the electrolyte retention capability. The average particle size of the positive electrode active material is the particle size ($D_{50}$) when the ratio based on the total volume of the positive electrode active material (volume fraction) is 50%. The average particle size of the positive electrode active material ($D_{50}$) is obtained by measuring a suspension, prepared by suspending the positive electrode active material in water, by the laser scattering method using a laser scattering type particle size measuring apparatus (e.g., Microtrac).

The content of the positive electrode active material may be 80% by mass or more, 85% by mass or more, or 90% by mass or more based on the total amount of the positive electrode active material, the conductive agent, and the binder. The content of the positive electrode active material may be, for example, 99% by mass or less based on the total amount of the positive electrode active material, the conductive agent, and the binder.

The conductive agent may be carbon black, graphite, carbon fiber, carbon nanotubes, acetylene black, or the like.

The content of the conductive agent may be 1% by mass or more, 3% by mass or more, or 5% by mass or more based on the total amount of the positive electrode active material, the conductive agent, and the binder. The content of the conductive agent is preferably 15% by mass or less, more preferably 12% by mass or less, still more preferably 9% by mass or less based on the total amount of the positive electrode active material, the conductive agent, and the binder from the viewpoint of suppressing increase in the volume of the positive electrode 6 and reduction in the energy density of the polymer secondary battery 1 associated with the increase.

The binder is not particularly limited as long as the binder dose not decomposed on the surface of the positive electrode 6, and is a polymer, for example. Examples of the binder may include resins such as polyvinylidene fluoride, polyacrylonitrile, styrene-butadiene rubber, carboxymethyl cellulose, fluorine rubber, ethylene-propylene rubber, polyacrylic acid, polyimide, and polyamide; and copolymer resins having these resins as the main skeleton (e.g., polyvinylidene fluoride-hexafluoropropylene copolymer).

The content of the binder may be 1% by mass or more, 3% by mass or more, or 5% by mass or more based on the total amount of the positive electrode active material, the conductive agent, and the binder. The content of the binder may be 15% by mass or less, 12% by mass or less, or 9% by mass or less based on the total amount of the positive electrode active material, the conductive agent, and the binder.

The positive electrode mixture layer 10 may further comprise a plastic crystal, a molten salt such as an ionic liquid, and the like, as required. Examples of the molten salt can include ones similar to molten salts mentioned below. The content of the molten salt may be 0.01 to 20% by mass based on the total amount of the positive electrode mixture layer.

The thickness of the positive electrode mixture layer 10 is a thickness equal to or larger than the average particle size of the positive electrode active material from the viewpoint of further increasing the electrical conductivity, and is preferably 10 μm or more, more preferably 20 μm or more, still more preferably 30 μm or more. The thickness of the positive electrode mixture layer 10 is preferably 100 μm or less, more preferably 80 μm or less, still more preferably 60 μm or less. By setting the thickness of the positive electrode mixture layer to 100 μm or less, it is possible to suppress an imbalance of charge and discharge caused by variation of the charged level of the positive electrode active material in the proximity of the surface of the positive electrode mixture layer 10 and in the proximity of the surface of the positive electrode current collector 9.

The mixture density of the positive electrode mixture layer 10 is preferably 1 $g/cm^3$ or more from the viewpoint of bringing the conductive agent and the positive electrode active material into close contact to each other to thereby reduce the electronic resistance of the positive electrode mixture layer 10.

The negative electrode current collector 11 may be formed with copper, stainless steel, titanium, nickel or the like. The negative electrode current collector 11 may be specifically a rolled copper foil, for example, a perforated copper foil having a pore diameter of 0.1 to 10 mm, an expanded metal, a foamed metal sheet or the like. The negative electrode current collector 11 may be formed with any material other than those described above, and additionally, its shape and production method are not limited.

The thickness of the negative electrode current collector 11 may be 1 μm or more, 5 μm or more, or 10 μm or more. The thickness of the negative electrode current collector 11 is 100 μm or less, 50 μm or less, or 20 μm or less.

The negative electrode mixture layer 12, in one embodiment, comprises a negative electrode active material and a binder.

As the negative electrode active material, ones used as a negative electrode active material in the field of common energy devices such as secondary batteries can be used. Examples of the negative electrode active material

include metal lithium, lithium alloys, metal compounds, carbon materials, metal complexes, and organic polymer compounds. These may be used singly or two or more of these may be used in combination. Of these, it is preferred that the negative electrode active material be a carbon material. Examples of the carbon material include graphite such as natural graphite (such as scale-like graphite) and artificial graphite, carbon black such as acetylene black, Ketjen black, channel black, furnace black, lamp black, and thermal black, amorphous carbon, and carbon fibers.

The average particle size of the negative electrode active material ($D_{50}$) is preferably 1 $\mu$m or more, more preferably 3 $\mu$m or more, still more preferably 5 $\mu$m or more and preferably 20 $\mu$m or less, more preferably 18 $\mu$m or less, still more preferably 16 $\mu$m or less from the viewpoint of suppressing increase in the irreversible capacity due to reduction in the particle size as well as of obtaining a well-balanced negative electrode 8 of which electrolyte retention capability is enhanced. The average particle size of the negative electrode active material ($D_{50}$) is measured by the same method as for the average particle size of the positive electrode active material ($D_{50}$).

The content of the negative electrode active material may be the same as the content of positive electrode active material in the positive electrode mixture layer 10 mentioned above.

The binder and its content may be similar to the binder and its content in the positive electrode mixture layer 10 aforementioned.

The negative electrode mixture layer 12 may further comprise a conductive agent from the viewpoint of further reducing the resistance of the negative electrode 8. The conductive agent and its content may be similar to the conductive agent and its content in the positive electrode mixture layer 10 aforementioned.

The negative electrode mixture layer 12 may further comprise a plastic crystal, a molten salt such as an ionic liquid, and the like, as required. Examples of the molten salt can include ones similar to molten salts mentioned below. The content of the molten salt may be 0.01 to 20% by mass based on the total amount of the negative electrode mixture layer.

The thickness of the negative electrode mixture layer 12 is equal to or larger than the average particle size of the negative electrode active material from the viewpoint of further increasing the electrical conductivity, and is preferably 10 $\mu$m or more, more preferably 15 $\mu$m or more, still more preferably 20 $\mu$m or more. The thickness of the negative electrode mixture layer 12 is preferably 50 $\mu$m or less, more preferably 45 $\mu$m or less, still more preferably 40 $\mu$m or less. By setting the thickness of the negative electrode mixture layer 12 to 50 $\mu$m or less, it is possible to suppress an imbalance of charge and discharge caused by variation of the charged level of the positive electrode active material in the proximity of the surface of the negative electrode mixture layer 12 and in the proximity of the surface of the negative electrode current collector 11.

The mixture density of the negative electrode mixture layer 12 is preferably 1 g/cm$^3$ or more from the viewpoint of bringing the conductive agent and the negative electrode active material into close contact to each other to thereby reduce the electronic resistance of the negative electrode mixture layer 12.

It is possible to form the electrolyte layer 7 from a polymer electrolyte composition. The polymer electrolyte composition comprises a polymer having a specific structural unit, a specific electrolyte salt, and a specific inorganic oxide.

[Polymer]

The polymer electrolyte composition comprises a polymer having a structural unit represented by the following formula (1).

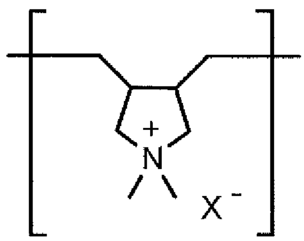

(1)

In the formula (1), $X^-$ represents a counter anion. Examples of $X^-$ herein include $BF_4^-$ (tetrafluoroborate anion), $PF_6^-$ (hexafluorophosphate anion), $N(FSO_2)_2^-$ (bis (fluorosulfonyl)imide anion, $[FSI]^-$), $N(CF_3SO_2)_2^-$ (bis(trifluoromethanesulfonyl)imide anion, $[TFSI]^-$), $C(SO_2F)_3^-$ (tris(fluorosulfonyl)carbanion, $[f3C]^-$), $B(C_2O_4)_2^-$ (bisoxalatoborate anion, $[BOB]^-$), $BF_3(CF_3)^-$, $BF_3(C_2F_5)^-$, $BF_3(C_3F_7)^-$, $BF_3(C_4F_9)^-$, $C(SO_2CF_3)_3^-$, $CF_3SO_2O^-$, $CF_3COO^-$, and $RCOO^-$ (R is an alkyl group having 1 to 4 carbon atoms, a phenyl group, or a naphthyl group). Of these, $X^-$ is preferably at least one selected from the group consisting of $BF_4^-$, $PF_6^-$, $[FSI]^-$, $[TFSI]^-$, and $[f3C]^-$, more preferably $[TFSI]^-$ or $[FSI]^-$.

The viscosity average molecular weight Mv (g·mol$^{-1}$) of the polymer having a structural unit represented by the formula (1) is not particularly limited, and preferably $1.0 \times 10^5$ or more, more preferably $3.0 \times 10^5$ or more. Also, the

viscosity average molecular weight of the polymer is preferably $5.0 \times 10^6$ or less, more preferably $1.0 \times 10^6$. When the viscosity average molecular weight is $1.0 \times 10^5$ or more, the self-supportability of the polymer electrolyte tends to be more excellent. Additionally, when the viscosity average molecular weight is $5.0 \times 10^6$ or less, the handling ability of forming by application tends to be higher.

In the present description, the "viscosity average molecular weight" can be evaluated by viscometry, which is a general measuring method, and can be calculated from, for example, an intrinsic-viscosity number [η] measured based on JISK7367-3:1999.

It is preferred that the polymer having a structural unit represented by the formula (1) be a polymer composed only of the structural unit represented by the formula (1), that is a homopolymer, from the viewpoint of ionic conductivity.

The polymer having a structural unit represented by the formula (1) may be a polymer represented by the following formula (2):

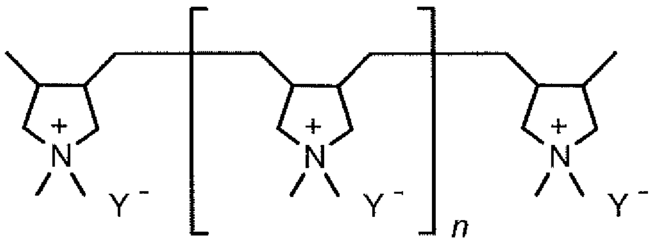

(2)

In the formula (2), n is 300 to 4000, and $Y^-$ represents a counter anion. As $Y^-$, it is possible to use one similar to those exemplified for $X^-$.

n is 300 or more, preferably 400 or more, more preferably 500 or more. n is also 4000 or less, preferably 3500 or less, more preferably 3000 or less. n is also 300 to 4000, preferably 400 to 3500, more preferably 500 to 3000. When n is 300 or more, the self-supportability of the polymer electrolyte sheet tends to be more excellent. When n is 4000 or less, the ionic conductivity of the polymer electrolyte sheet tends to be further increased.

The method for producing a polymer having a structural unit represented by the formula (1) is not particularly limited, and it is possible to use, for example, the method for production described in Journal of Power Sources 2009, 188, 558-563.

The polymer having a structural unit represented by the formula (1) ($X^-$ = $[TFSI]^-$) can be obtained by, for example, the following production method.

First, poly(diallyldimethyl ammonium)chloride ([P(DADMA)][Cl]) is dissolved in deionized water and stirred to prepare a [P(DADMA)][Cl] aqueous solution. As [P(DADMA)][Cl], for example, a commercially available product can be uses as it is. Then, Li[TFSI] is separately dissolved in deionized water to prepare an aqueous solution comprising Li[TFSI].

Thereafter, the two aqueous solutions are mixed such that the molar ratio of Li[TFSI] to [P(DADMA)][Cl] (molar amount of Li[TFSI] / molar amount of [P(DADMA)][Cl]) falls within 1.2 to 2.0 and stirred for 2 to 8 hours to precipitate solid out, and the resulting solid is collected by filtration. By washing the solid using deionized water and drying the solid under vacuum for 12 to 48 hours, it is possible to obtain a polymer having a structural unit represented by the formula (1) ([P(DADMA)] [TFSI]).

The content of the polymer having a structural unit represented by the formula (1) is not particularly limited, and is preferably 10% by mass or more, more preferably 20% by mass or more, still more preferably 30% by mass or more based on the total amount of the composition. The content of the polymer is also preferably 80% by mass or less, more preferably 70% by mass or less, still more preferably 60% by mass or less based on the total amount of the composition. When the content of the polymer is 10% by mass or more, the strength of the polymer electrolyte sheet tends to be further increased. Additionally, by setting the content of the polymer to 80% by mass or less and increasing the amount of other components (electrolyte salt, molten salt, and the like), it is possible to further increase the ionic conductivity of the polymer electrolyte sheet.

[Electrolyte Salt]

The polymer electrolyte composition comprises at least one electrolyte salt selected from the group consisting of lithium salts, sodium salts, magnesium salts, and calcium salts. Here, an inorganic oxide including a lithium element, a lanthanum element, and a zirconium element is not included in the electrolyte salt.

As the electrolyte salt, ones used as an electrolyte salt for liquid electrolytes for common ion batteries can be used. The anion of the electrolyte salt may be a halide ion ($I^-$, $Cl^-$, $Br^-$, or the like), $SCN^-$, $BF_4^-$, $BF_3(CF_3)^-$, $BF_3(C_2F_5)^-$, $BF_3(C_3F_7)^-$, $BF_3(C_4F_9)^-$, $PF_6^-$ $ClO_4^-$, $SbF_6^-$, $[FSI]^-$, $[TFSI]^-$, $N(C_2F_5SO_2)_2^-$, $BPh_4^-$, $B(C_2H_4O_2)_2^-$, $[f3C]^-$, $C(CF_3SO_2)_3^-$, $CF_3COO^-$, $CF_3SO_2O^-$, $C_6F_5SO_2O^-$, $[BOB]^-$, $RCOO^-$ (R is an alkyl group having 1 to 4 carbon atoms, a phenyl group, or

a naphthyl group), or the like. Of these, the anion of the electrolyte salt is preferably at least one selected from the group consisting of $PF_6^-$, $BF_4^-$, $[FSI]^-$, $[TFSI]^-$, $[BOB]^-$, and $ClO_4^-$, more preferably $[TFSI]^-$ or $[FSI]^-$.

The lithium salt may be $LiPF_6$, $LiBF_4$, Li[FSI], Li[TFSI], Li[f3C], Li[BOB], $LiClO_4$, $LiBF_3(CF_3)$, $LiBF_3(C_2F_5)$, $LiBF_3(C_3F_7)$, $LiBF_3(C_4F_9)$, $LiC(SO_2CF_3)_3$, $LiCF_3SO_2O$, $LiCF_3COO$, LiRCOO (R is an alkyl group having 1 to 4 carbon atoms, a phenyl group, or a naphthyl group), or the like. These may be used singly or two or more of these may be used in combination.

The sodium salt may be $NaPF_6$, $NaBF_4$, Na[FSI], Na[TFSI], Na[f3C], Na[BOB], $NaClO_4$, $NaBF_3(CF_3)$, $NaBF_3(C_2F_5)$, $NaBF_3(C_3F_7)$, $NaBF_3(C_4F_9)$, $NaC(SO_2CF_3)_3$, $NaCF_3SO_2O$, $NaCF_3COO$, NaRCOO (R is an alkyl group having 1 to 4 carbon atoms, a phenyl group, or a naphthyl group), or the like. These may be used singly or two or more of these may be used in combination.

The magnesium salt may be $Mg(PF_6)_2$, $Mg(BF_4)_2$, $Mg[FSI]_2$, $Mg[TFSI]_2$, $Mg[f3C]_2$, $Mg[BOB]_2$, $Mg(ClO_4)_2$, $Mg[BF_3(CF_3)_3]_2$, $Mg[BF_3(C_2F_5)]_2$, $Mg[BF_3(C_3F_7)]_2$, $Mg[BF_3(C_4F_9)]_2$, $Mg[C(SO_2CF_3)_3]_2$, $Mg(CF_3SO_2O)_2$, $Mg(CF_3COO)_2$, $Mg(RCOO)_2$ (R is an alkyl group having 1 to 4 carbon atoms, a phenyl group, or a naphthyl group), or the like. These may be used singly or two or more of these may be used in combination.

The calcium salt may be $Ca(PF_6)_2$, $Ca(BF_4)_2$, $Ca[FSI]_2$, $Ca[TFSI]_2$, $Ca[f3C]_2$, $Ca[BOB]_2$, $Ca(ClO_4)_2$, $Ca[BF_3(CF_3)_3]_2$, $Ca[BF_3(C_2F_5)]_2$, $Ca[BF_3(C_3F_7)]_2$, $Ca[BF_3(C_4F_9)]_2$, $Ca[C(SO_2CF_3)_3]_2$, $Ca(CF_3SO_2O)_2$, $Ca(CF_3COO)_2$, $Ca(RCOO)_2$ (R is an alkyl group having 1 to 4 carbon atoms, a phenyl group, or a naphthyl group), or the like. These may be used singly or two or more of these may be used in combination.

Of these, the electrolyte salt is preferably a lithium salt, more preferably at least one selected from the group consisting of $LiPF_6$, $LiBF_4$, Li[FSI], Li[TFSI], Li[f3C], Li[BOB], and $LiClO_4$, still more preferably Li[TFSI] or Li[FSI] from the viewpoint of dissociation ability and electrochemical stability.

The mass ratio of the electrolyte salt to the polymer having a structural unit represented by the formula (1) (mass of the electrolyte salt/mass of the polymer having a structural unit represented by the formula (1)) is not particularly limited, and is preferably 0.1 or more, more preferably 0.2 or more, still more preferably 0.3 or more. The mass ratio is also preferably 1.0 or less, more preferably 0.9 or less, still more preferably 0.8 or less. When the mass ratio of the electrolyte salt is 0.1 or more, the ion carrier concentration of the polymer electrolyte sheet becomes sufficient and the ionic conductivity tends to further increase. When the mass ratio of the electrolyte salt is 1.0 or less, the mechanical strength of the polymer electrolyte sheet tends to be more excellent.

The content of the electrolyte salt is not particularly limited, and is preferably 3% by mass or more, more preferably 5% by mass or more, still more preferably 7% by mass or more based on the total amount of the composition. The content of the electrolyte salt is preferably 30% by mass or less, more preferably 25% by mass or less, still more preferably 20% by mass or less based on the total amount of the composition. When the content of the electrolyte salt is 3% by mass or more, the ionic conductivity tends to further increase. When the content of the electrolyte salt is 30% by mass or less, the flexibility of the polymer electrolyte sheet tends to further increase.

[Inorganic Oxide]

The polymer electrolyte composition comprises an inorganic oxide including a lithium element, a lanthanum element, and a zirconium element. The polymer electrolyte composition may be excellent in the component retention of the composition by comprising the inorganic oxide. An interface between the electrolyte and the electrode is more likely to be formed by increase in the component retention of the composition, and the resistance in the battery can be reduced. Thus, it is possible to further enhance the battery characteristics. In accordance with this fact, it is also possible to further enhance the ionic conductivity of the polymer electrolyte composition.

The inorganic oxide may be a composite inorganic oxide composed of a lithium element, a lanthanum element, and a zirconium element. Examples of such a composite inorganic oxide include lithium lanthanum zirconate (LLZ) such as $Li_7La_3Zr_2O_{12}$.

In the inorganic oxide, when the molar number of the lanthanum element is set to M(La) and the molar number of the zirconium element is set to M(Zr), M(La) and M(Zr) satisfy the following expression (2):

$$0.4 \leq M(Zr)/M(La) \leq 0.8 \quad (2).$$

M(Zr)/M(La) is 0.4 or more, preferably 0.45 or more, more preferably 0.5 or more. Also, M(Zr)/M(La) is 0.8 or less, preferably 0.75 or less, more preferably 0.7 or less. Also, M(Zr)/M(La) is 0.4 to 0.8, preferably 0.45 to 0.75, more preferably 0.5 to 0.7. When the M(Zr)/M(La) is within the range described above, the crystal structure of the inorganic oxide tends to be a cubic crystal system.

The crystal structure of the inorganic oxide may be a cubic crystal system. When the crystal structure of the

inorganic oxide is a cubic crystal system, the ionic conductivity of the polymer electrolyte composition tends to increase.

The crystal structure of the inorganic oxide may be a garnet type. When the crystal structure of the inorganic oxide is a garnet type, the ionic conductivity of the polymer electrolyte composition tends to increase.

It is preferred that the inorganic oxide exhibit diffraction peaks at $2\theta = 17 \pm 2°$, $2\theta = 26 \pm 2°$, and $2\theta = 31 \pm 2°$ in X-ray diffraction. In the inorganic oxide exhibiting such diffraction peaks, the crystal structure tends to be a cubic crystal system.

Measurement by an X-ray diffraction method (CuK$\alpha$: wavelength ($\lambda$) = 1.5418 Å) is performed with, for example, a powder X-ray diffraction instrument (manufactured by Rigaku Corporation, Geigerflex RAD-2X).

The content of the inorganic oxide is not particularly limited, and is preferably 0.1% by mass or more, more preferably 0.5% by mass or more, still more preferably 1% by mass or more based on the total amount of the composition. The content of the inorganic oxide is preferably 50% by mass or less, more preferably 45% by mass or less, still more preferably 40% by mass or less based on the total amount of the composition. When the content of the inorganic oxide is within the range described above, the component retention of the composition tends to be more excellent.

[Other Components]

The polymer electrolyte composition may further comprise a molten salt as required.

A molten salt is composed of a cationic component and an anionic component. As the molten salt, a common ionic liquid or plastic crystal can be used without particular limitation.

It should be noted that, in the present description, an "ionic liquid" means a molten salt that is liquid at 30°C, that is, a molten salt of which melting point is 30°C or less, and a "plastic crystal" means a molten salt that is solid at 30°C, that is, a molten salt of which melting point is higher than 30°C.

The ionic liquid, if it is a molten salt that is liquid at 30°C, can be used without particular limitation. Specifically, examples thereof include ionic liquids that are obtained by combining a cationic component such as $[EMI]^+$, $[DEME]^+$, $[Py12]^+$, $[Py13]^+$, or $[PP13]^+$ and an anionic component such as $PF_6^-$, $BF_4^-$, $[FSI]^-$, $[TFSI]^-$, or $[f3C]^-$, the ionic liquids being liquid at 30°C. These may be used singly or two or more of these may be used in combination. Also, the ionic liquid may be used in combination with a plastic crystal mentioned below.

As the ionic liquid, it is possible to use a complex of the lithium salt mentioned above (e.g., Li[TFSI] or the like) and a glyme represented by the following formula (A). It should be noted that these complexes may be herein referred to as "glyme complexes".

$$R^1O\text{-}(CH_2CH_2O)_m\text{-}R^2 \qquad (A)$$

In the formula (A), $R^1$ and $R^2$ each independently represent an alkyl group having 4 or less carbon atoms, and m represents an integer of 1 to 6.

The alkyl groups as $R^1$ and $R^2$ may be a methyl group, an ethyl group, a n-propyl group, an isopropyl group, a n-butyl group, an isobutyl group, a t-butyl group or the like. Of these, it is preferred that the alkyl group be a methyl group or an ethyl group.

The glyme may be ethylene glycol dimethyl ether (also referred to as "monoglyme"), diethylene glycol dimethyl ether (also referred to as "diglyme"), triethylene glycol dimethyl ether (also referred to as "triglyme"), tetraethylene glycol dimethyl ether (also referred to as "tetraglyme"), pentaethylene glycol dimethyl ether (also referred to as "pentaglyme"), hexaethylene glycol dimethyl ether (also referred to as "hexaglyme"), or the like. Of these, the glyme is preferably triglyme or tetraglyme, more preferably tetraglyme.

It is possible to obtain the glyme complex by mixing, for example, a lithium salt mentioned above and a glyme mentioned above. It is possible to obtain the glyme complex by mixing a lithium salt and a glyme, for example, at a temperature equal to or less than the boiling point of the glyme. It is possible to appropriately set the time and temperature for mixing.

A plastic crystal, if it is a molten salt that is solid at 30°C, can be used without particular limitation. Specifically, examples thereof include plastic crystals that are obtained by combining a cationic component such as $[EMI]^+$, $[DEME]^+$, $[Py12]^+$, $[Py13]^+$, or $[PP13]^+$ and an anionic component such as $PF_6^-$, $BF_4^-$, $[FSI]^-$, $[TFSI]^-$, or $[f3C]^-$, the plastic crystals being solid at 30°C. More specifically, examples thereof include [Py12][TFSI] (melting point: 90°C), [Py12][FSI] (melting point: 205°C), [DEME][f3C] (melting point: 69°C), [Py13][f3C] (melting point: 177°C), and [PP13][f3C] (melting point: 146°C). These may be used singly or two or more of these may be used in combination. Also, the plastic crystal may be used in combination with the ionic liquid mentioned above. When the melting point is 80°C or more, the plastic crystal tends to further suppress liquid leakage during normal battery use. Accordingly, a battery having a bipolar electrode in which electrodes are layered in series in a single cell can be achieved by use of the plastic crystal. The plastic crystal is, from the viewpoint of ionic conductivity, preferably [Py12][TFSI] (melting point: 90°C).

In the case where the molten salt is further comprised in the polymer electrolyte composition, the content of

the molten salt may be 10 to 70% by mass based on the total amount of the composition.

The polymer electrolyte composition may further comprise particles or fiber of an oxide such as silica and alumina, an additive having a lithium-salt dissociation ability such as borate ester and aluminate ester and the like, as required. These may be used singly or two or more of these may be used in combination. In the case where these components are further comprised in the polymer electrolyte composition, the content of these components may be 0.01 to 20% by mass based on the total amount of the composition.

The polymer electrolyte composition may be formed into a sheet form.

The thickness of the polymer electrolyte sheet may be adjusted to a desired thickness in accordance with the configuration of the battery and may be 1 to 200 μm. The thickness of the polymer electrolyte sheet is preferably 1 μm or more, more preferably 3 μm or more, still more preferably 5 μm or more. The thickness of the polymer electrolyte sheet is also preferably 200 μm or less, more preferably 150 μm or less, still more preferably 100 μm or less, particularly preferably 50 μm or less. When the thickness is 1 μm or more, a short circuit between electrodes tends to be further reduced. When the thickness is 200 μm or less, the energy density tends to further increase.

Subsequently, a method for producing the polymer secondary battery 1 aforementioned will be described. The method for producing the polymer secondary battery 1 according to the present embodiment comprises a first step of forming the positive electrode mixture layer 10 on the positive electrode current collector 9 to obtain the positive electrode 6, a second step of forming the negative electrode mixture layer 12 on the negative electrode current collector 11 to obtain the negative electrode 8, and a third step of providing the electrolyte layer 7 between the positive electrode 6 and the negative electrode 8.

In the first step, the positive electrode 6 is obtained by, for example, dispersing materials used for the positive electrode mixture layer in a dispersion medium using a kneading machine, a disperser or the like to obtain a slurried positive electrode mixture, then applying this positive electrode mixture by a doctor blade method, a dipping method, a spray method or the like on the positive electrode current collector 9, and then vaporizing the dispersion medium. After the dispersion medium is vaporized, a compression molding step by a roll press may be provided as required. The positive electrode mixture layer 10 may be formed as a positive electrode mixture layer of a multi-layer structure by performing the aforementioned steps from application of the positive electrode mixture to vaporization of the dispersion medium a plurality of times.

The dispersion medium used in the first step may be water, 1-methyl-2-pyrrolidone (hereinbelow, also referred to as NMP) or the like.

In the second step, the method for forming the negative electrode mixture layer 12 on the negative electrode current collector 11 may be a method similar to the first step aforementioned.

In the third step, in one embodiment, the electrolyte layer 7 is formed by producing a polymer electrolyte sheet comprising the aforementioned polymer electrolyte composition on a substrate, for example. Figure 4(a) is a schematic cross sectional view showing a polymer electrolyte sheet according to one embodiment. As shown in Figure 4(a), the polymer electrolyte sheet 13A comprises a substrate 14 and an electrolyte layer 7 provided on the substrate 14.

The polymer electrolyte sheet 13A is produced by, for example, dispersing a polymer electrolyte composition used for the electrolyte layer 7 in a dispersion medium to obtain a slurry, then applying the slurry on the substrate 14, and then vaporizing the dispersion medium. The dispersion medium into which the polymer electrolyte composition used for the electrolyte layer 7 is dispersed may be acetone, ethyl methyl ketone, γ-butyrolactone or the like, for example.

The substrate 14 is one having heat resistance that may tolerate heating when the dispersion medium is vaporized, is not limited as long as the substrate does not react with the polymer electrolyte composition, and is not swelled with the polymer electrolyte composition, and examples of the substrate include metal foils, and films composed of a resin. The substrate 14 may be specifically a metal foil such as an aluminum foil, a copper foil, or a nickel foil, a film composed of a resin such as polyethylene terephthalate, polytetrafluoroethylene, polyimide, polyethersulfone, or polyetherketone (general-purpose engineering plastic) or the like.

In the case where a film composed of a resin is used as the substrate 14, the heat resistant temperature of the substrate 14 is preferably 50°C or more, more preferably 100°C or more, still more preferably 150°C or more, and may be for example, 400°C or less, from the viewpoint of adaptability with the dispersion medium used for the electrolyte layer 7. When a substrate having the above-described heat resistant temperature is used, it is possible to suitably use the dispersion medium as aforementioned. It should be noted that the heat resistant temperature of the substrate 14 in the case where a film composed of a resin is used represents the melting point or decomposition temperature of the resin.

It is preferred that the thickness of the substrate 14 be is as small as possible while the strength to tolerate the tensile strength in an applicator is maintained. The thickness of the substrate 14 is preferably 5 μm or more, more preferably 10 μm or more, still more preferably 25 μm or more and preferably 100 μm or less, more preferably 50 μm or less, still more preferably 40 μm or less from the viewpoint of reducing the total volume of the polymer electrolyte sheet 13 as well as of retaining the strength when the polymer electrolyte composition is applied to the substrate 14.

It is possible to produce a polymer electrolyte sheet continuously while winding the sheet into a roll form. In this case, the surface of the electrolyte layer 7 comes in contact with the back surface of the substrate 14, a portion of

the electrolyte layer 7 sticks to the substrate 14, and thus the electrolyte layer 7 may be broken. In order to prevent such a situation, the polymer electrolyte sheet, as another embodiment, may be one in which a protective material is provided on the side of the electrolyte layer 7 opposite to the substrate 14. Figure 4(b) is a schematic cross sectional view showing a polymer electrolyte sheet according to another embodiment. As shown in Figure 4(b), the polymer electrolyte sheet 13B is further provided with a protective material 15 on the side of the electrolyte layer 7 opposite to the substrate 14.

The protective material 15 may be one that is easily peelable from the electrolyte layer 7, and is preferably an apolar resin film such as polyethylene, polypropylene, polytetrafluoroethylene and the like. When an apolar resin film is used, the electrolyte layer 7 and the protective material 15 do not stick to each other, and it is possible to easily peel the protective material 15 off.

The thickness of the protective material 15 is preferably 5 μm or more, more preferably 10 μm or more and preferably 100 μm or less, more preferably 50 μm or less, still more preferably 30 μm or less from the viewpoint of reducing the total volume of the polymer electrolyte sheet 13B as well as of retaining the strength.

The heat resistant temperature of the protective material 15 is preferably -30°C or more, more preferably 0°C or more and preferably 100°C or less, more preferably 50°C or less from the viewpoint of suppressing deterioration under low-temperature environments as well as suppressing softening under high-temperature environments. When the protective material 15 is provided, a step of vaporizing the dispersion medium aforementioned is not essential, and thus it is not necessary to making the heat resistant temperature higher.

In the method in which the electrolyte layer 7 is provided between the positive electrode 6 and the negative electrode 8 by using the polymer electrolyte sheet 13A, it is possible to obtain the polymer secondary battery 1 by, for example, peeling the substrate 14 from the polymer electrolyte sheet 13A and layering the positive electrode 6, the electrolyte layer 7, and the negative electrode 8 via lamination. In this time, lamination is carried out such that the electrolyte layer 7 is positioned on the side of the positive electrode mixture layer 10 of the positive electrode 6 and on the side of the negative electrode mixture layer 12 of the negative electrode 8, that is, such that the positive electrode current collector 9, the positive electrode mixture layer 10, the electrolyte layer 7, the negative electrode mixture layer 12, and the negative electrode current collector 11 are placed in this order.

In the third step, in another embodiment, the electrolyte layer 7 is formed by application on at least either one of the side of the positive electrode mixture layer 10 of the positive electrode 6 or the side of the negative electrode mixture layer 12 of the negative electrode 8, and is formed by application on preferably both of the side of the positive electrode mixture layer 10 of the positive electrode 6 and the side of the negative electrode mixture layer 12 of the negative electrode 8. In this case, it is possible to obtain the polymer secondary battery 1 by, for example, layering the positive electrode 6 on which the electrolyte layer 7 is provided and the negative electrode 8 on which the electrolyte layer 7 is provided via lamination such that the electrolyte layers 7 are brought in contact to each other.

The method for forming the electrolyte layer 7 on the positive electrode mixture layer 10 by application is, for example, a method in which the polymer electrolyte composition used for the electrolyte layer 7 is dispersed in a dispersion medium to obtain a slurry and then the polymer electrolyte composition is applied on the positive electrode mixture layer 10 using an applicator. The dispersion medium into which the polymer electrolyte composition used for the electrolyte layer 7 is dispersed may be acetone, ethyl methyl ketone, γ-butyrolactone and the like.

The method for forming the electrolyte layer 7 on the negative electrode mixture layer 12 by application may be a method similar to the method for forming the electrolyte layer 7 on the positive electrode mixture layer 10 by application.

[Second Embodiment]

Subsequently, a polymer secondary battery according to Second Embodiment will be described. Figure 5 is a schematic cross sectional view showing one embodiment of an electrode group in the polymer secondary battery according to Second Embodiment. As shown in Figure 5, the point where polymer secondary battery in Second Embodiment is different from the polymer secondary battery of First Embodiment is that an electrode group 2B comprises a bipolar electrode 16. That is, the electrode group 2B comprises a positive electrode 6, a first electrolyte layer 7, a bipolar electrode 16, a second electrolyte layer 7, and a negative electrode 8 in this order.

The bipolar electrode 16 comprises a bipolar electrode current collector 17, a positive electrode mixture layer 10 provided on the surface of the side of the negative electrode 8 of the bipolar electrode current collector 17, and a negative electrode mixture layer 12 on the surface of the side of the positive electrode 6 of the bipolar electrode current collector 17.

The bipolar electrode current collector 17 may be formed with aluminum, stainless steel, titanium or the like. The bipolar electrode current collector 17 may be specifically an aluminum perforated foil having pores of which pore diameter is 0.1 to 10 mm, an expanded metal, a foamed metal sheet or the like. The bipolar electrode current collector 17 may be formed with any material other than those described above as long as the material is not subject to change such as dissolution and oxidation during use of the battery, and additionally, its shape and production method are not

limited.

The thickness of the bipolar electrode current collector 17 may be 10 μm or more, 15 μm or more, or 20 μm or more. The thickness of the bipolar electrode current collector 17 may be 100 μm or less, 80 μm or less, or 60 μm or less.

Subsequently, a method for producing the secondary battery according to Second Embodiment will be described. The method for producing the secondary battery according to the present embodiment comprises a first step of forming the positive electrode mixture layer 10 on the positive electrode current collector 9 to obtain the positive electrode 6, a second step of forming the negative electrode mixture layer 12 on the negative electrode current collector 11 to obtain the negative electrode 8, a third step of forming the positive electrode mixture layer 10 on one surface of the bipolar electrode current collector 17 and forming the negative electrode mixture layer 12 on the other surface to obtain the bipolar electrode 16, and a fourth step of forming the electrolyte layer 7 each between the positive electrode 6 and the bipolar electrode 16 and between the negative electrode 8 and the bipolar electrode 16.

The first step and the second step may be a method similar to the first step and the second step in First Embodiment.

In the third step, the method forming the positive electrode mixture layer 10 on one surface of the bipolar electrode current collector 17 may be a method similar to the first step in First Embodiment. The method forming the negative electrode mixture layer 12 on the other surface of the bipolar electrode current collector 17 may be a method similar to the second step in First Embodiment.

Of the fourth step, as the method for providing the electrolyte layer 7 between the positive electrode 6 and the bipolar electrode 16, in one embodiment, the electrolyte layer 7 is formed, for example, by producing a polymer electrolyte sheet comprising the polymer electrolyte composition on a substrate. The method for producing the polymer electrolyte sheet may be a method similar to the method for producing the polymer electrolyte sheets 13A and 13B in First Embodiment.

In the fourth step, the method for providing the electrolyte layer 7 between the negative electrode 8 and the bipolar electrode 16 may a method similar to the method for providing electrolyte layer 7 between the positive electrode 6 and the bipolar electrode 16 aforementioned.

The method for forming the electrolyte layer 7 by application each on the positive electrode mixture layer 10 of the positive electrode 6 and on the negative electrode mixture layer 12 of the bipolar electrode 16 may be a similar method to the method for forming the electrolyte layer 7 by application on the positive electrode mixture layer 10 and the method for forming the electrolyte layer 7 by application on the negative electrode mixture layer 12 according to one embodiment of the third step in First Embodiment.

Of the fourth step, as the method for providing the electrolyte layer 7 between the positive electrode 6 and the bipolar electrode 16, in another embodiment, the electrolyte layer 7 is formed by application on at least either one of the side of the positive electrode mixture layer 10 of the positive electrode 6 or the side the negative electrode mixture layer 12 of the bipolar electrode 16, and is formed by application preferably both of the side of the positive electrode mixture layer 10 of the positive electrode 6 and the side of the negative electrode mixture layer 12 of the bipolar electrode 16. In this case, for example, the positive electrode 6 on which the electrolyte layer 7 is provided and the bipolar electrode 16 on which the electrolyte layer 7 is provided are layered via lamination such that the electrolyte layers 7 are brought in contact to each other.

## Examples

Hereinbelow, the invention will be described more specifically according to Examples, but the present invention is not intended to be limited to these Examples.

[Polymer Synthesis]

A polymer having a structural unit represented by the formula (1) was synthesized by converting the counter anion $Cl^-$ of poly(diallyldimethyl ammonium)chloride to $[TFSI]^-$.

First, diluted was 100 parts by mass of a [P(DADMA)][Cl] aqueous solution (20% by mass aqueous solution, manufactured by Sigma-Aldrich Co. LLC.) with 500 parts by mass of distilled water to prepare a diluted polymer aqueous solution. Then, 43 parts by mass of Li[TFSI] (manufactured by KISHIDA CHEMICAL Co., Ltd.) was dissolved in 100 parts by mass of water to prepare a Li[TFSI] aqueous solution. This was added dropwise to the diluted polymer aqueous solution, and a white precipitate was obtained by stirring for two hours. The precipitate was separated by filtration, and after washing with 400 parts by mass of distilled water, filtration was conducted again. Washing and filtration were repeated five times. Thereafter, moisture was evaporated by vacuum drying at 105°C to obtain [P(DADMA)] [TFSI]. The viscosity average molecular weight of [P(DADMA)][TFSI] was $2.11 \times 10^6$ $g \cdot mol^{-1}$.

After the viscosity of the polymer [η] at 25°C was measured by using poly(methyl methacrylate) (PMMA) as the reference material and using an Ubbelohde viscometer, the viscosity average molecular weight Mv was calculated

based on [η] = KMv (wherein K represents an extension factor, and the value depends on the temperature, the polymer, and the nature of the solvent.).

(Example 1)

[Preparation of Polymer Electrolyte Sheet]

To 80 parts by mass of the polymer obtained, 20 parts by mass of Li[TFSI] as an electrolyte salt, 10 parts by mass of LLZ (manufactured by Toshima Manufacturing Co., Ltd., average particle size 5 μm) as an inorganic oxide, 40 parts by mass of [LiG4][TFSI] as a molten salt, and 150 parts by mass of acetone as a dispersion medium were added and stirred to prepare a slurry. It should be noted that [LiG4][TFSI] used was one obtained by mixing tetraethylene glycol dimethyl ether (manufactured by Sigma-Aldrich Co. LLC.) and Li[TFSI] (manufactured by KISHIDA CHEMICAL Co., Ltd.) at a molar ratio of 1:1 in advance. The slurry was applied on an aluminum foil with a gap of 250 μm by the doctor blade method and dried at 60°C for one hour to vaporize acetone. Thereafter, drying was carried out at 60°C under a reduced pressure environment of $1.0 \times 10^4$ Pa or less (0.1 atmosphere or less) for 10 hours to obtain a polymer electrolyte sheet of which thickness is 60 μm.

Quantification of each element of the LLZ used in Example 1 was conducted in accordance with a conventional method using an ICP optical emission spectrometer (manufactured by Hitachi, Ltd., P-4010). The ratio of the molar number of the zirconium element to the molar number of the lanthanum element (M(Zr)/M(La)) was 0.54.

The LLZ used in Example 1 was analyzed using a powder X-ray diffraction instrument (manufactured by Rigaku Corporation, Geigerflex RAD-2X, X-ray source: CuKα ray). An XRD spectrum in the diffraction angle range of 15 to 60° for LLZ used in Example 1 is shown in Figure 6. As shown in Figure 6, in X-ray diffraction, it was confirmed that peaks were included at 2θ = 17°, 19°, 26°, 28°, 31°, 34°, 38°, 43°, 51°, 52°, and 53°. From these peaks, the crystal structure of the LLZ used in Example 1 was confirmed to be a cubic crystal system.

[Component Retention]

The polymer electrolyte sheet obtained was punched out to a diameter of 16 mm, sandwiched between medicine wrapping paper of 19 mm in diameter and a mirror surface plate of 20 mm in diameter, and pressurized at 1.0 kg/cm$^2$ by adjusting the pressure by a force gauge. The retention of the component (molten salt) of the polymer electrolyte sheet was evaluated from the mass change in the medicine wrapping paper before and after the pressure is applied on the polymer electrolyte sheet. The component retention was calculated in accordance with the following equation:

Component retention (%) = {1 - (mass increment in the medicine wrapping paper/mass of the molten salt used in the polymer electrolyte sheet)} × 100

The retention of the component (molten salt) of the polymer electrolyte sheet of Example 1 was 92%.

[Measurement of Ionic Conductivity]

The polymer electrolyte sheet obtained was punched out to a diameter of 10 mm to produce a sample for ionic conductivity measurement. This sample was placed in a bipolar closed cell (HS cell, manufactured by Hohsen Corp.) and measured using an alternating current impedance measuring device (manufactured by Solartron, model 1260). The alternating current impedance was measured at room temperature (25°C) and 10 mV in the range of 1 Hz to 10 MHz. The resistance value was calculated from the width of the circular arc of the Nyquist plot, and the ionic conductivity was calculated from the resistance value. It should be noted that placement of a sample in the closed cell was carried out in a dry room.

The ionic conductivity (25°C) of the polymer electrolyte sheet of Example 1 was $2.5 \times 10^{-5}$ S/cm$^2$.

(Comparative Example 1)

A polymer electrolyte sheet was produced in the same manner as in Example 1 except that no LLZ as the inorganic oxide was added. The thickness of the polymer electrolyte sheet was 60 μm. When evaluation was conducted in the same manner as in Example 1, the component retention was 79%, and the ionic conductivity (25°C) was 1.1 ×

$10^{-5}$ S/$cm^2$.

The polymer electrolyte sheet of Example 1 was more excellent in the component retention of the polymer electrolyte sheet than Comparative Example 1. It was found that the polymer electrolyte sheet of Example 1 was also excellent in the ionic conductivity. From these results, it was confirmed that the polymer electrolyte composition of the present invention is excellent in the component retention of the composition.

**Industrial Applicability**

According to the present invention, provided is a polymer electrolyte composition that is excellent in the component retention of the composition and additionally excellent in ionic conductivity. The present inventors believe that, when such a polymer electrolyte composition is applied to a polymer secondary battery, it is possible to reduce the electronic resistance in the battery and enhance the battery characteristics.

**Reference Signs List**

1 ... polymer secondary battery, 2, 2A, 2B ... electrode group, 3 ... battery outer packaging, 4 ... positive electrode collector tab, 5 ... negative electrode collector tab, 6 ... positive electrode, 7 ... electrolyte layer, 8 ... negative electrode, 9 ... positive electrode current collector, 10 ... positive electrode mixture layer, 11 ... negative electrode current collector, 12 ... negative electrode mixture layer, 13A, 13B ... polymer electrolyte sheet, 14 ... substrate, 15 ... protective material, 16 ... bipolar electrode, 17 ... bipolar electrode current collector

**Claims**

1. A polymer electrolyte composition comprising:
   a polymer having a structural unit represented by a following formula (1):

   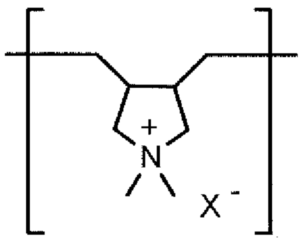

   (1)

   wherein $X^-$ represents a counter anion;
   at least one electrolyte salt selected from the group consisting of lithium salts, sodium salts, magnesium salts, and calcium salts; and
   an inorganic oxide including a lithium element, a lanthanum element, and a zirconium element, wherein,
   when a molar number of the lanthanum element contained in the inorganic oxide is set to M(La) and a molar number of the zirconium element contained
   in the inorganic oxide is set to M(Zr), M(La) and M(Zr) satisfy a following expression (2):

   $$0.4 \leq M(Zr)/M(La) \leq 0.8 \quad (2).$$

2. The polymer electrolyte composition according to claim 1, wherein the crystal structure of the inorganic oxide is a cubic crystal system.

3. The polymer electrolyte composition according to claim 1, wherein the inorganic oxide exhibits diffraction peaks at $2\theta = 17\pm2°$, $2\theta = 26\pm2°$, and $2\theta = 31\pm2°$ in X-ray diffraction.

4. The polymer electrolyte composition according to any one of claims 1 to 3, wherein the composition is formed in sheet form.

5. The polymer electrolyte composition according to claim 4, wherein a thickness of the sheet is 1 to 200 $\mu$m.

**6.** A polymer secondary battery comprising:

a positive electrode;
a negative electrode; and
an electrolyte layer comprising the polymer electrolyte composition according to any one of claims 1 to 5 provided between the positive electrode and the negative electrode.

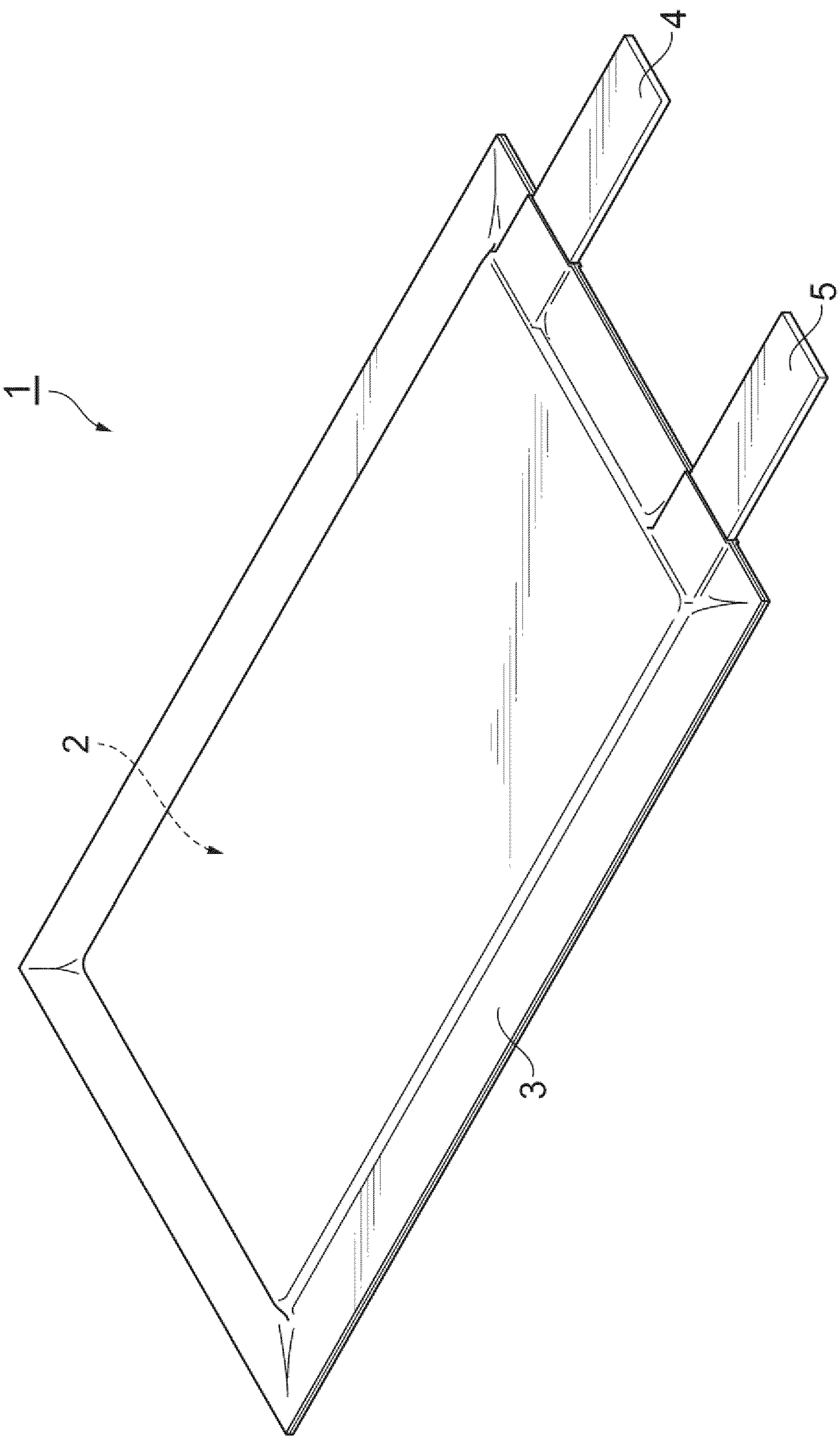


Fig.1

*Fig.2*

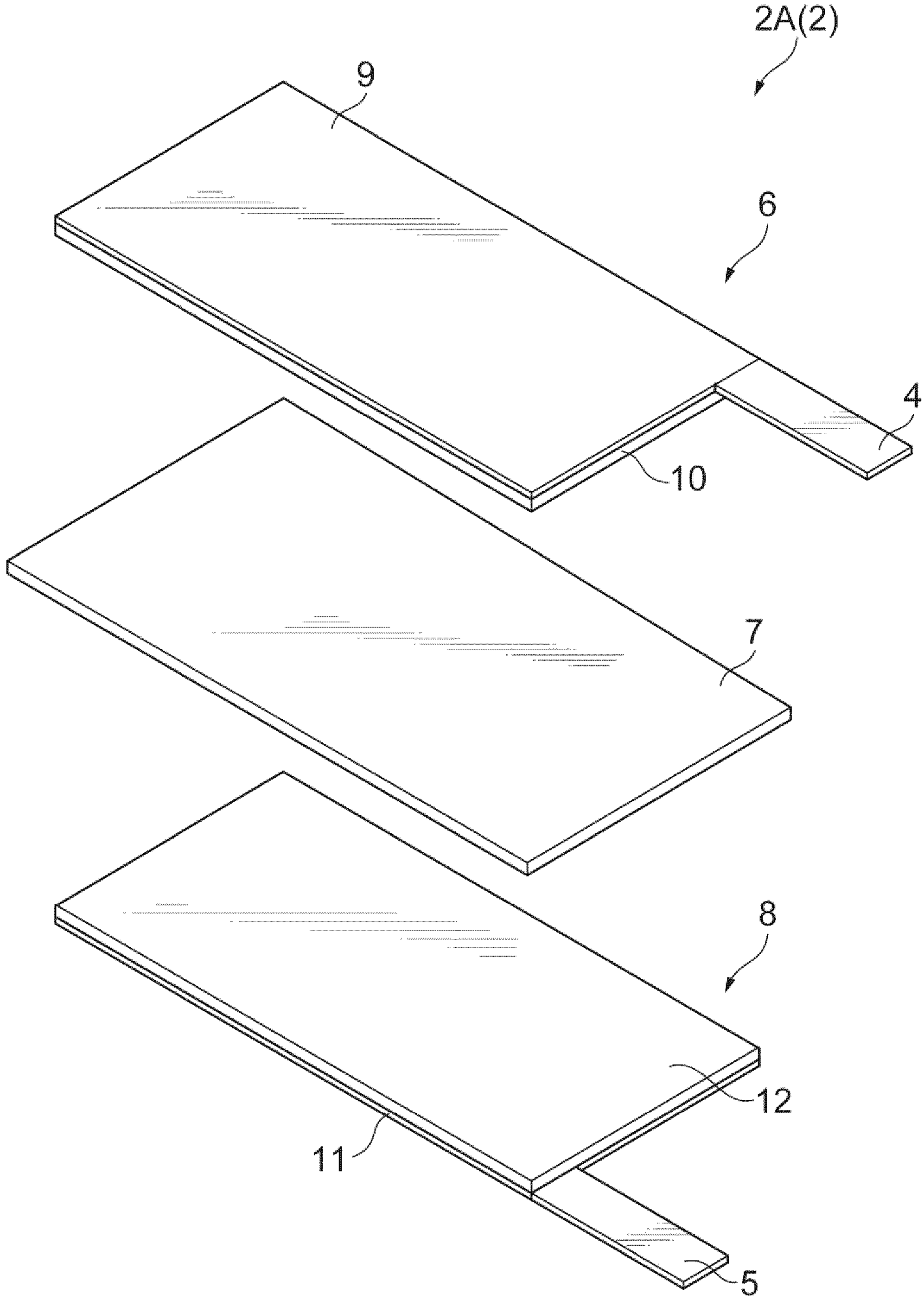

*Fig.3*

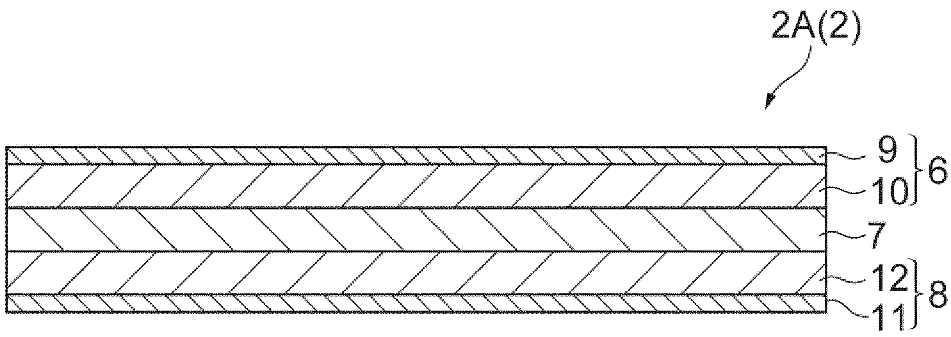

*Fig.4*

(a)

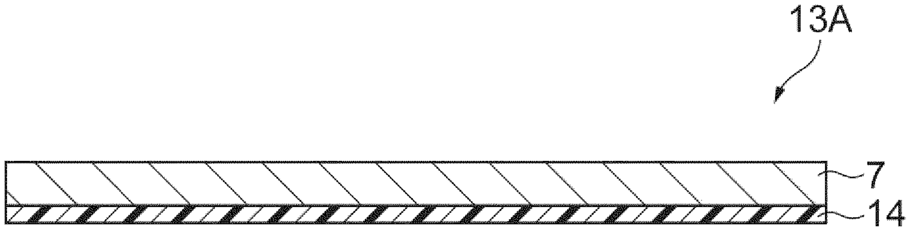


(b)

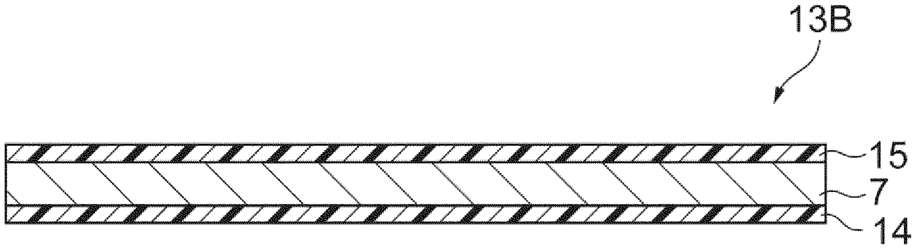

*Fig.5*

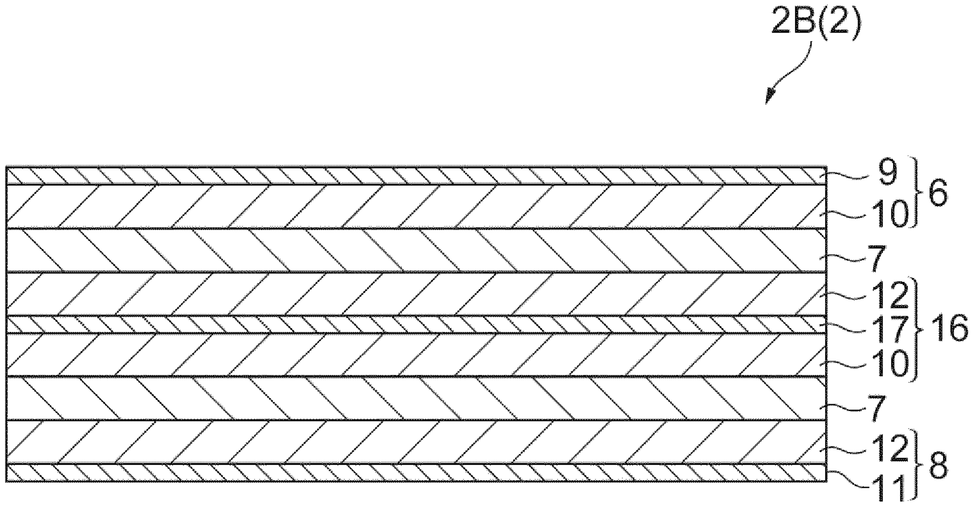

**Fig.6**

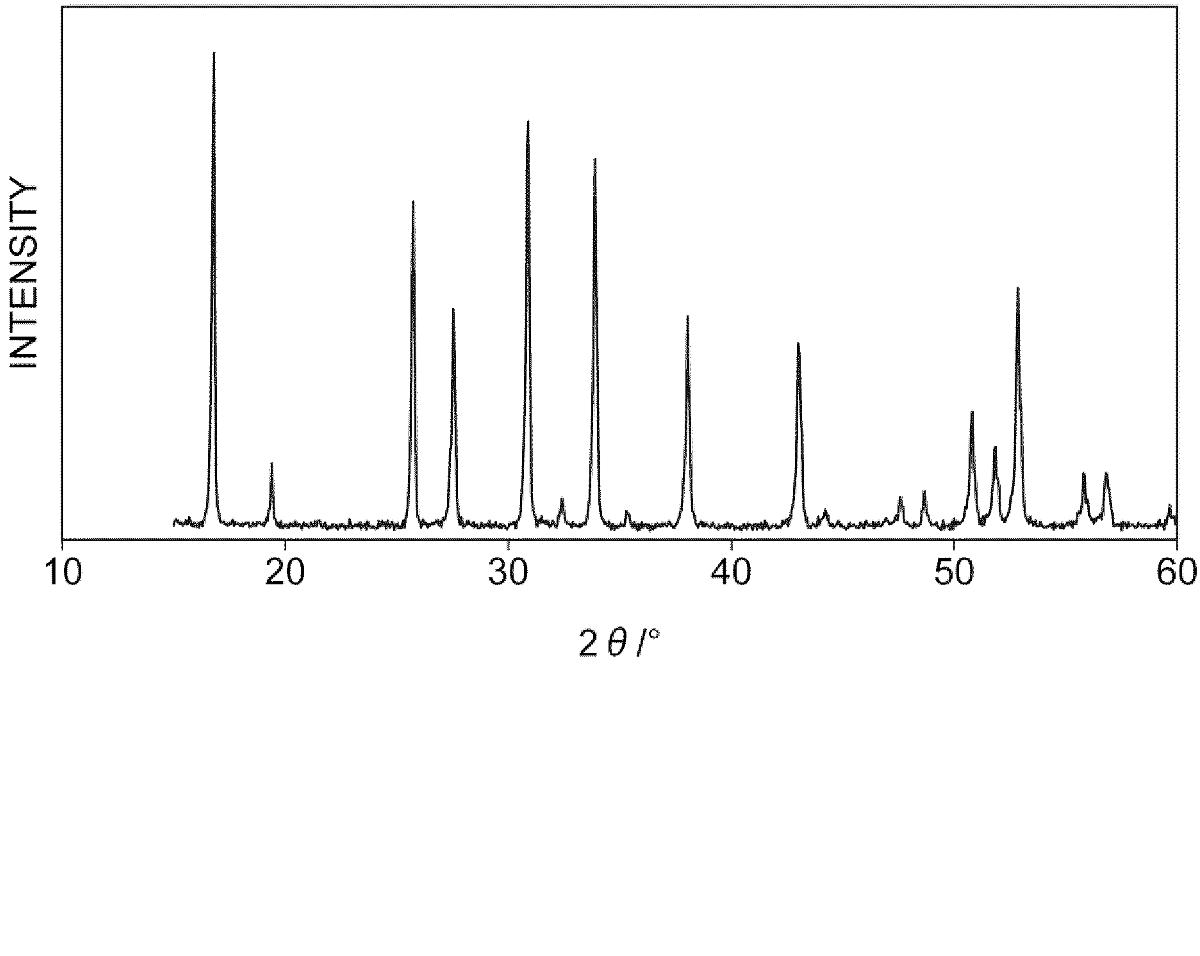

**INTERNATIONAL SEARCH REPORT**

International application No.
PCT/JP2017/016082

A. CLASSIFICATION OF SUBJECT MATTER
*H01M10/0565*(2010.01)i, *H01M10/0567*(2010.01)i

According to International Patent Classification (IPC) or to both national classification and IPC

B. FIELDS SEARCHED

Minimum documentation searched (classification system followed by classification symbols)
H01M10/0565, H01M10/0567

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | JP 2006-49158 A (Trekion Co., Ltd.), 16 February 2006 (16.02.2006), claims; examples; paragraph [0030] (Family: none) | 1-6 |
| Y | JP 2006-32237 A (Dai-Ichi Kogyo Seiyaku Co., Ltd.), 02 February 2006 (02.02.2006), claims; examples & US 2006/0020093 A1 claims; examples & EP 1619742 A2 & CA 2512326 A1 | 1-6 |
| Y | G. B. APPETECCHI et al., Journal of Power Sources, 2010, 195(11), pp.3668-3675 | 1-6 |

[×] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 June 2017 (28.06.17) | 11 July 2017 (11.07.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/016082

C (Continuation). DOCUMENTS CONSIDERED TO BE RELEVANT

| Category* | Citation of document, with indication, where appropriate, of the relevant passages | Relevant to claim No. |
|---|---|---|
| Y | Anne-Laure PONT et al., Journal of Power Sources, 2009, 188(2), pp.558-563 | 1-6 |
| Y | JP 2016-139512 A (Fujifilm Corp.), 04 August 2016 (04.08.2016), claims; examples (Family: none) | 1-6 |
| A | JP 2012-174659 A (Shinshu University), 10 September 2012 (10.09.2012), claims; examples & US 2013/0323604 A1 claims; examples & WO 2012/114193 A1 & CN 103403946 A | 1-6 |
| A | JP 2015-176857 A (Honda Motor Co., Ltd.), 05 October 2015 (05.10.2015), claims; examples (Family: none) | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007141467 A


### Non-patent literature cited in the description


- *Journal of Power Sources,* 2009, vol. 188, 558-563